# FASCICULE DE BREVET EUROPEEN

(11) **EP 1 301 852 B1**
(45) Date de publication et mention de la délivrance du brevet: **04.01.2006**
(21) Numéro de dépôt: 01958153.7
(22) Date de dépôt: 20.07.2001
(51) Int. Cl.: G06F 3/06, G06F 11/14

(54) **PROCEDE DE SAUVEGARDE DE DONNEES INFORMATIQUES**
VERFAHREN ZUR SICHERSTELLUNG VON COMPUTERDATEN
METHOD FOR SAVING COMPUTER DATA

(30) Priorité: 20.07.2000 FR 0009541
(43) Date de publication de la demande: 16.04.2003
(73) Titulaire: Neartek Inc., New York, NY 10011 (US)
(72) Inventeur: AZAMBRE, Hubert, Near Technologies, F-91951 Villebon Sur Yvette Cedex (FR); DELBOSC, Jean-Marc, Near Technologies, F-91591 Villebon Sur Yvette Cedex (FR); BLANCHET, Claude, Near Technologies, F-91591 Villebon Sur Yvette Cedex (FR)
(74) Mandataire: Beresford, Keith Denis Lewis
(86) Numéro de dépôt international: PCT/FR2001/002381
(87) Numéro de publication internationale: WO 2002/008884

(56) Documents cités:
- US-A- 5 809 511
- US-A- 5 963 971

## Description

La présente invention concerne le domaine de la sauvegarde de données informatiques.

On connaît dans l'état de la technique le brevet US5,963,971 qui décrit un système de stockage sur un support constituant un disque virtuel pour la sauvegarde de données. Un ordinateur hôte est connecté à un sous-système de stockage qui émule un système de stockage à bandes, ce sous-système incluant une interface de stockage comprenant un cache de disque et une bibliothèque physique à cartouches de bande.

On connaît également le brevet américain US5,809,511 qui décrit un système de transfert de données entre un poste hôte et un équipement complémentaire comprenant une mémoire cache et un équipement robotisé de gestion de supports d'enregistrement. Le serveur virtuel de media VRMS prévoit des volumes logiques enregistrés dans un cache ou dans un media extractible physique, un catalogue et une base de données de bibliothèques comprenant des informations de base permettant de référencer un volume logique pour identifier les emplacements physiques des données correspondantes.

La but de la présente invention est de proposer une solution qui permet d'optimiser la taille des supports permanents et de faciliter la reconstruction des données.

A cet effet, l'invention concerne selon son acception la plus générale un procédé de sauvegarde de données conforme à la revendication 1.

Les informations de base comprennent l'adresse logique sur la cartouche du début du volume et l'adresse logique sur la cartouche de la fin du volume.

Les informations de base comprennent la taille approximative du volume.

Avantageusement, les informations de base comprennent le numéro du lecteur utilisé pour réaliser le transfert du volume du cache disque vers la cartouche et le numéro du disque dans lequel se trouvait le volume au moment de son transfert vers la cartouche.

Les informations de base comprennent le numéro de la partition disque dans laquelle se trouvait le volume avant son transfert sur la cartouche.

Les informations de base comprennent le numéro du processeur utilisé pour transférer le volume du cache disque vers la cartouche.

Les informations de base comprennent le code barre de la cartouche contenant le volume et/ou le nom de la cartouche.

Les informations de base contiennent une partie au moins des informations comprenant le code hexadécimal indiquant le type de la cartouche, la taille totale des données stockées sur la cartouche, la capacité maximale de la cartouche, l'état du compteur de chargement de la cartouche, le code hexadécimal indiquant l'état du volume, le numéro de la machine hôte de la configuration à laquelle appartient le volume, le code de caractères utilisé dans l'entête du volume, la date de dernière écriture ou modification du volume par la machine hôte, l'heure de dernière écriture ou modification du volume par la machine hôte, la date de dernier accès en lecture du volume par la machine hôte, l'heure de dernier accès en lecture du volume par la machine hôte, la date du transfert du volume du cache disque vers la cartouche, et l'heure du transfert du volume du cache disque vers la cartouche.

Avantageusement, les données transférées depuis le support permanent vers la mémoire tampon lors de la restauration des données sur l'ordinateur client ne comprennent pas-les informations de base.

L'invention concerne également un équipement de sauvegarde de données conforme à la revendication 10, comprenant un serveur de sauvegarde commandant une mémoire tampon organisée en volumes de taille prédéterminée, et un poste de lecture-écriture sur des supports permanents, le serveur comportant une interface de communication avec au moins un ordinateur client pour les échanges de données, caractérisé en ce que le serveur comporte en outre une base de données pour l'enregistrement d'informations de base et des moyens pour associer aux données enregistrées temporairement dans les volumes de la mémoire tampon les informations de base, et pour supprimer les informations de bases lors du transfert des données depuis les supports permanents vers la mémoire tampon.

Dans l'un de ses modes de fonctionnement, notamment destiné à la gestion des mainframes, les volumes de données écrits par les machines hôtes sont dans un premier temps créés par l'équipement de sauvegarde selon l'invention dans un espace disque tampon. Ces volumes ont une taille maximale fixée au moment de la configuration de l'équipement de sauvegarde selon l'invention, généralement assez faible, de l'ordre de 250 Mo. Les volumes sont dans un deuxième temps transférés par l'équipement de sauvegarde selon l'invention vers des cartouches, en un ou plusieurs exemplaires. Seules les données réellement significatives sont transférées sur bande. Ainsi, un volume de taille maximale 250 Mo peut par exemple ne contenir que 10 Mo de donndes, Dans ce cas, seuls ces 10 Mo sont transférés sur bande, de façon à optimiser l'espace bande.

L'équipement de sauvegarde gère en interne, grâce à une base de données, la liste des volumes connus, en stockant un certain nombre d'informations, telles que :
- le nom du volume
- le support sur lequel il est stocké (disque, cartouche)
- la position sur le support (numéro de partition disque, ou adresses logiques de début et de fin sur cartouche)
- etc.

Ces informations sont essentielles pour pouvoir retrouver un volume.

Au moment du transfert des données du cache disque vers des cartouches, l'équipement de sauvegarde selon l'invention ajoute en fin de transfert de chaque volume des informations privées, appelées « informations de base ». Ces informations sont uniquement écrites sur cartouches, et sont ignorées dans les transferts en sens inverse, dans le cas où un volume est transféré depuis une cartouche vers le cache disque, par exemple en vue d'une restauration par la machine hôte. Elles sont donc entièrement gérées par l'équipement de sauvegarde selon l'invention en interne et transparentes pour les machines hôtes.

Les informations de base pour un volume donné sont écrites sous la forme d'une chaîne de ca-ractères ASCII ayant la structure suivante :
titre CR LfpositionDébutVolume positionFinVolume taillevolume voieLecteur / voieDisque partitionDisque numéroProcesseur codeBarre nomCartouche typeCartouche tailleUtilisée tailleCartouche cptChargement nomVolume étatVolume codeHost typeCodage dateEcriture heureEcriture dateLecture heureLecture dateVidage heureVidage CR LF

Dans cette chaîne, tous les champs sont séparés entre eux par un espace, le caractère \ indiquant que la suite de la chaîne est détaillée à la ligne suivante, pour des raisons de mise en page uniquement. Les caractères \ n'apparaissent pas dans les véritables informations de base.

### Description des champs des informations de base

*titre* : titre indiquant sous forme abarégée la signification des principaux champs suivants.
CR : caractère ASCII de code 0x13 (hexadécimal).
LF : caractère ASCII de code 0x10 (hexadécimal).
*positionDébutVolume* : adresse logique sur la cartouche du début du volume.
*positionFinVolume* : adresse logique sur la cartouche de la fin du volume.
*tailleVolume* : taille approximative du volume en Ko.
*voieLecteur* : numéro du lecteur (défini dans la configuration l'équipement de sauvegarde selon l'invention) utilisé pour réaliser le transfert du volume du cache disque vers la cartouche.
*voieDisque* : numéro du disque (défini dans la configuration l'équipement de sauvegarde selon l'invention) dans lequel se trouvait le volume au moment de son transfert vers la cartouche.
*partitionDisque* : numéro de la partition disque dans laquelle se trouvait le volume avant son transfert sur la cartouche.
*numéroProcesseur* : numéro du processeur utilisé pour transférer le volume du cache disque vers la cartouche.
*codeBarre* : code barre de la cartouche contenant le volume.
*nomCartouche* : nom de la cartouche, tel qu'il est déclaré sous l'équipement de sauvegarde selon l'invention. Ce nom est indépendant du code barre.
*typeCartouche* : code hexadécimal indiquant le type de la cartouche. Les valeur possibles sont les suivantes :
   - 0x00000001L cartouche d'exploitation
   - 0x00000010L cartouche avec accès en lecture autorisé
   - 0x00000020L cartouche avec accès en écriture autorisé
   - 0x00000080L cartouche en cours de réorganisation
   - 0x00000100L cartouche à réorganiser
   - 0x00000200L cartouche à ne pas réutiliser
   - 0x00000400L cartouche bloquée vide
   - 0x00000800L cartouche réorganisée
   - 0x00001000L cartouche de type archive
   - 0x00002000L cartouche de type miroir
   - 0x00010000L cartouche pour lecteur DLT
   - 0x00020000L cartouche pour lecteur Exabyte
   - 0x00040000L cartouche pour lecteur 3480
   - 0x00080000L cartouche pour lecteur 3594
   - 0x01F00000L masque pour numéro du pool archive ou miroir auquel appartient la cartouche

Le code utilisé pour le champ *typeCartouche* peut éventuellement être une combinaison des valeur précédentes.
*tailleUtilisée* : taille totale des données stockées sur la cartouche, en Méga Octets.
*taillecartouche* : capacité maximale de la cartouche, en Méga Octets.
*cptChargement* : compteur de chargement de la cartouche. Indique le nombre de fois que la cartouche a été chargée dans un lecteur. Cette information sert à déterminer l'usure de la cartouche.
*nomvolume* : nom du volume, tel qu'il est connu de la machine hôte .
*étatvolume* : code hexadécimal indiquant l'état du volume. Ce code est une combinaison des indicateurs dont les masques d'accès et les valeurs possibles sont les suivants :
   - 0x00000001L 1 si le volume est valide, 0 si invalide (ancienne version ou volume logiquement effacé)
   - 0x00000008L 1 si le volume est de type miroir
   - 0x00000010L 1 si le volume a une copie miroir sur une autre cartouche
   - 0x00000020L 1 si une copie de ce volume doit être faite sur une cartouche miroir
   - 0x00001000L 1 si le volume est de type archive
   - 0x00002000L 1 si le volume est partagé entre plusieurs systèmes hôtes
   - 0x00010000L 1 si le volume doit toujours être copiés sur des cartouches DLT
   - 0x00020000L 1 si le volume doit toujours être copiés sur des cartouches Exabyte
   - 0x00040000L 1 si le volume doit toujours être copiés sur des cartouches 3480
   - 0x00080000L 1 si le volume doit toujours être copiés sur des cartouches 3590
   - 0x01F00000L numéro du pool archive ou miroir (de 0 à 31)
*codeHost* : numéro de la machine hôte de la configuration l'équipement de sauvegarde selon l'invention à laquelle appartient le volume.
*typeCodage* : code de caractères utilisé dans l'entête du volume (0 = ASCII, 1 = EBCDIC).
*dateEcriture* : date de dernière écriture ou modification du volume par la machine hôte, sous la forme aaaa-mm-jj
*heureEcriture* : heure de dernière écriture ou modification du volume par la machine hôte, sous la forme hh:mm:ss
*dateLecture* : date de dernier accès en lecture du volume par la machine hôte, sous la forme
   aaaa-mm-jj
*heureLecture* : heure de dernier accès en lecture du volume par la machine hôte, sous la forme hh:mm:ss
*dateVidage* : date du transfert du volume du cache disque vers la cartouche, sous la forme
   jj-mm-aaaa
*heurevidage :* heure du transfert du volume du cache disque vers la cartouche, sous la forme hh:mm:ss

### Cumul des informations de base

Les informations de base sont cumulatives, pour accélérer l'analyse des cartouches en vue d'une reconstruction de la base de données.

supposons qu'une bande contient les volumes V1, V2, V3, V4 et V5. Les informations de base associées à chacun de ces volumes sont appelées B1, B2, B3, B4 et B5. On a donc sur

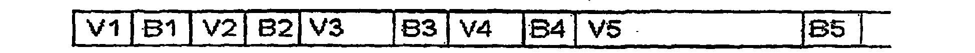

la bande :

Les informations de base B1 ne contiennent que des informations concernant le volume V1. Les informations de base B2 contiennent dans un seul enregistrement de données un cumul de B1 et des informations concernant le volume V2. B2 contient donc les informations de V1 et V2.

Les informations de base B3 contiennent dans un seul enregistrement de données un cumul de B2 et des informations concernant le volume V3. B3 contient donc les informations de V1, V2 et V3.

Etc.

Les dernières informations de base de la cartouche, B5 dans l'exemple précédent, contiennent donc un cumul de toutes les informations concernant tous les volumes présents sur la cartouche.

Dans le cas où une cartouche contient de très nombreux volumes, les informations de base cumulées peuvent atteindre une taille importante. Pour limiter cet accroissement, une taille maximale a été arbitrairement fixée à 132 Ko. Lorsque la construction standard des informations de base d'un volume dépasse 132 Ko, l'équipement de sauvegarde selon l'invention affecte à ce volume des informations de base réduites, contenant uniquement les informations de base de ce nouveau volume, sans cumul des informations des volumes précédents. Pour les volumes suivants, le mécanisme standard de cumul des informations du volume courant avec celles du volume précédent est repris.

Dans les informations de base réduites, le champ *adresseVolume* du seul volume décrit (adresse logique de début du volume sur la cartouche) contient une adresse différente de 0.

### Exemple

Supposons qu'une cartouche contient n+1 volumes. Le nième volume (Vₙ) a des informations de base complètes, appelées Bₙ, qui contiennent donc la liste des informations des n premiers volumes. Le premier volume décrit dans Bₙ, V₁, est indiqué avec un champ *adresseVolume* à 0. Après le volume Vₙ et ses informations de base Bₙ, on trouve sur la cartouche le volume Vₙ₊₁ et ses informations de base Bₙ₊₁, que nous supposons réduites. Ceci signifie que Bₙ₊₁ ne contient que les informations du volume Vₙ₊₁, avec un champ *adresseVolume* indiquant la position sur la cartouche du volume Vₙ₊₁ à une adresse supérieure à 0, puisque le volume Vₙ₊₁ ne se trouve pas en début de cartouche. L'analyse des dernières informations de base de la cartouche (Bₙ₊₁) peut donc très simplement détecter que ces informations sont réduites (car aₙ₊₁ > 0), et on peut en déduire que les précédentes informations de base (Bₙ) se trouvent sur la cartouche juste avant l'adresse aₙ₊₁.

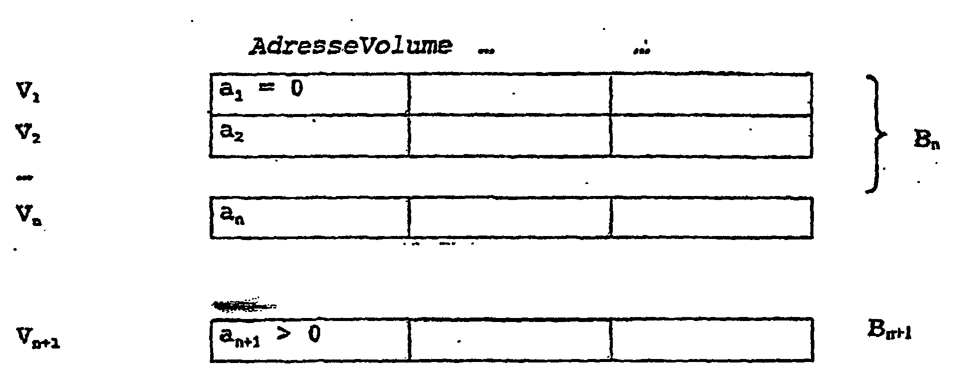

### Récupération des informations de base

En cas de perte totale de la base de données du système l'équipement de sauvegarde selon l'invention, la reconstruction complète de la base peut être effectuée grâce à ces informations de base.

Une fonctionnalité intégrée au code des processeurs de l'équipment de sauvegarde selon l'invention permet d'analyser une cartouche pour en extraire les dernières informations de base. Cette analyse peut également être effectuée par un logiciel externe : il suffit de se positionner en fin de bande, de reculer d'un enregistrement et de lire le dernier enregistrement de données.

Les informations de base ainsi récupérées en fin de cartouche contiennent une description des volumes de la cartouche. Comme décrit au paragraphe précédent, si le champ *adresseVolume* du premier volume contient une valeur différente de 0, ceci signifie que le premier volume n'est pas au début de la bande. On doit en déduire qu'il s'agit d'informations de base réduites. Il suffit alors de se positionner sur la cartouche à l'adresse *adresseVolume,* puis de reculer de 1 enregistrement pour pouvoir lire les informations de base du volume précédent. Celles-ci sont elles-mêmes un cumul des informations de base des volumes précédents.

On doit poursuivre l'analyse arrière de la cartouche jusqu'à trouver des informations de base avec un champ *adresseVolume* à 0 pour le premier volume. L'ensemble des volumes de la cartouche peut alors être connu en cumulant toutes les informations de base récupérées.

### Reconstruction de la base à partir des informations de base

La reconstruction de la base nécessite la récupération de toutes les informations de base stockées sur toutes les cartouches de la librairie, puis leur analyse, par un logiciel approprié. L'ensemble de ces informations comprend toutes celles nécessaires pour reconstruire la base.

Pour ce faire, il convient non seulement de dresser la liste de tous les volumes contenus sur toutes les cartouches, mais aussi de déterminer pour chaque volume d'une cartouche s'il est valide pour la machine hôte ou non. En effet, un même volume (même nom, même système hôte) peut être présent sur plusieurs cartouches différentes, ou à plusieurs endroits sur une même cartouche. Ceci peut se produire pour les raisons suivantes : -
soit il s'agit de plusieurs versions différentes d'un même volume qui a été mis à jour plusieurs fois par la machine hôte
soit il s'agit des mêmes données qui ont été déplacées, par l'équipement de sauvegarde selon l'invention en interne.

Dans tous les cas, l'analyse des informations de base *dateEcriture* et *heureEcriture* de toutes les occurrences de ce volume permet de déterminer laquelle est la plus récente, et donc la seule valide. Si la version la plus récente est présente à plusieurs endroits (mêmes informations *dateEcriture* et *heureEcriture*), n'importe laquelle de ces occurrences peut être utilisée pour devenir la version valide du volume dans la nouvelle base.

Il suffit ensuite de recréer une base de données l'équipement de sauvegarde selon l'invention vide, et de remplir toutes les tables avec les informations collectées.

## Revendications

1. Procédé de sauvegarde de données informatiques consistant à transférer les données à sauvegarder depuis un ordinateur client vers une mémoire tampon formée par le disque dur d'un serveur de sauvegarde, et à transférer ensuite les données depuis ladite mémoire tampon sur un support permanent **caractérisé en ce que** la mémoire tampon est organisée en une pluralité de volumes de taille prédéterminée, et **en ce que** ledit procédé comporte une étape consistant à enregistrer sur ledit support permanent, après le transfert des données depuis la mémoire tampon sur le support permanent, une séquence d'informations de base unique spécifique à chacun desdits volumes , et une étape de constitution d'une base de données dans laquelle sont enregistrées les informations de base ayant chacune trait à un des volumes de taille prédéterminée composant ladite mémoire tampon.

2. Procédé de sauvegarde de données informatiques selon la revendication 1, **caractérisé en ce que** le support permanent est une cartouche magnétique et **en ce que** les informations de base comprennent l'adresse logique sur la cartouche du début du volume et l'adresse logique sur la cartouche de la fin du volume.

3. Procédé de sauvegarde de données informatiques selon la revendication 1 ou 2, **caractérisé en ce que** les informations de base comprennent la taille approximative du volume.

4. Procédé de sauvegarde de données informatiques selon l'une quelconque des revendications précédentes, **caractérisé en ce que** les informations de base comprennent le numéro du lecteur utilisé pour réaliser le transfert du volume du cache disque vers la cartouche et le numéro du disque dans lequel se trouvait le volume au moment de son transfert vers la cartouche.

5. Procédé de sauvegarde de données informatiques selon l'une quelconque des revendications précédentes, **caractérisé en ce que** les informations de base comprennent le numéro de la partition disque dans laquelle se trouvait le volume avant son transfert sur la cartouche.

6. Procédé de sauvegarde de données informatiques selon l'une quelconque des revendications précédentes, **caractérisé en ce que** les informations de base comprennent le numéro du processeur utilisé pour transférer le volume du cache disque vers la cartouche.

7. Procédé de sauvegarde de données informatiques selon l'une quelconque des revendications précédentes, **caractérisé en ce que** les informations de base comprennent le code barre de la cartouche contenant le volume et/ou le nom de la cartouche.

8. Procédé de sauvegarde de données informatiques selon l'une quelconque des revendications précédentes, **caractérisé en ce que** les informations de base comprennent le code hexadécimal indiquant le type de la cartouche, la taille totale des données stockées sur la cartouche, la capacité maximale de la cartouche, l'état du compteur de chargement de la cartouche, le code hexadécimal indiquant l'état du volume, le numéro de la machine hôte de la configuration à laquelle appartient le volume, le code de caractères utilisé dans l'entête du volume, la date de dernière écriture ou modification du volume par la machine hôte, l'heure de dernière écriture ou modification du volume par la machine hôte, la date de dernier accès en lecture du volume par la machine hôte, l'heure de dernier accès en lecture du volume par la machine hôte, la date du transfert du volume du cache disque vers la cartouche, et l'heure du transfert du volume du cache disque vers la cartouche.

9. Procédé de sauvegarde de données informatiques selon l'une quelconque des revendications précédentes, **caractérisé en ce que** les données transférées depuis le support permanent vers la mémoire tampon lors de la restauration des données sur l'ordinateur client ne comprennent pas les informations de base.

10. Équipement pour la mise en oeuvre d'un procédé de sauvegarde de données consistant à transférer les données à sauvegarder depuis un ordinateur client vers une mémoire tampon formée par le disque dur d'un serveur de sauvegarde, et à transférer ensuite les données depuis ladite mémoire tampon sur support permanent et à enregistrer sur ledit support permanent, après le transfert des volumes depuis la mémoire tampon sur le support permanent, une séquence d'informations de base unique spécifique à chacun desdits volumes, ledit équipement comprenant un serveur de sauvegarde commandant une mémoire tampon organisée en volumes de taille prédéterminée, et un poste de lecture-écriture sur des supports permanents, le serveur comportant une interface de communication avec au moins un ordinateur client pour les échanges de données, et une base de données pour l'enregistrement d'informations de base, l'équipement étant **caractérisé en ce que** le serveur comporte en outre des moyens pour associer aux données enregistrées temporairement dans les volumes de la mémoire tampon les informations de base ayant chacune trait à un des volumes de taille prédéterminée composant ladite mémoire tampon, et pour supprimer les informations de bases lors du transfert des données depuis les supports permanents vers la mémoire tampon.

## Patentansprüche

1. Verfahren zum Sichern von Computerdaten, das Folgendes umfasst: Übertragen der zu sichernden Daten von einem Computerclient zu einem Pufferspeicher, der durch die Festplatte eines Sicherungsservers gebildet ist, und anschließendes Übertragen der Daten vom genannten Pufferspeicher auf einen Dauerspeicher, **dadurch gekennzeichnet, dass** der Pufferspeicher in Form mehrerer Datenträgerinhalte vorbestimmter Größe organisiert ist und das Verfahren über einen Schritt, bei dem im genannten Permanentspeicher, nach Übertragen der Daten vom Pufferspeicher an den Permanentspeieher, eine einzigartige Sequenz von Grundinformationen, wie sie für jeden der genannten Datenträgerinhalte spezifisch ist, registriert wird, und einen Schritt verfügt, bei dem eine Datenbank aufgebaut wird, in der die Grundinformationen registriert sind, von denen sich jede auf einen der Datenträgerinhalte vorbestimmter Größe, die den genannten Pufferspeicher aufbauen, bezieht.

2. Verfahren zur Sicherung von Computerdaten nach Anspruch 1, **dadurch gekennzeichnet, dass** der Permanentspeicher eine Diskette ist und zu den Grundinformationen die logische Adresse auf der Diskette am Anfang des Datenträgerinhalts und die logische Adresse der Diskette am Ende des Datenträgerinhalts gehören.

3. Verfahren zur Sicherung von Computerdaten nach Anspruch 1 oder 2, **dadurch gekennzeichnet, dass** zu den Grundinformationen die ungefähre Größe des Datenträgerinhalts gehört.

4. Verfahren zur Sicherung von Computerdaten nach einem der vorstehenden Ansprüche, **dadurch gekennzeichnet, dass** zu den Grundinformationen die Nummer der zum Realisieren der Übertragung des Datenträgerinhalts des Plattencaches zur Diskette verwendeten Leseeinrichtung und die Nummer der Platte, auf der sich der Datenträgerinhalt zum Zeitpunkt seiner Übertragung zur Diskette befindet, gehören.

5. Verfahren zur Sicherung von Computerdaten nach einem der vorstehenden Ansprüche, **dadurch gekennzeichnet, dass** zu den Grundinformationen die Nummer der Plattenpartition, auf der sich der Datenträgerinhalt vor seiner Übertragung auf der Diskette befindet, gehört.

6. Verfahren zur Sicherung von Computerdaten nach einem der vorstehenden Ansprüche, **dadurch gekennzeichnet, dass** zu den Grundinformationen die Nummer des Prozessors, der dazu verwendet wird, den Datenträgerinhalt des Plattencaches zur Diskette zu übertragen, gehört.

7. Verfahren zur Sicherung von Computerdaten nach einem der vorstehenden Ansprüche, **dadurch gekennzeichnet, dass** zu den Grundinformationen der Strichcode der den Datenträgerinhalt enthaltenden Diskette und/oder der Name der Diskette gehören.

8. Verfahren zur Sicherung von Computerdaten nach einem der vorstehenden Ansprüche, **dadurch gekennzeichnet, dass** zu den Grundinformationen die folgenden gehören: der den Diskettentyp anzeigende Hexadezimalcode, die Gesamtgröße der auf der Diskette gespeicherten Daten, das maximale Speichervermögen der Diskette, der Zustand des Belegungszählers der Diskette, der den Zustand des Datenträgerinhalts anzeigende Hexadezimalcode, die Nummer des Hosts der Konfiguration, zu der der Datenträgerinhalt gehört, der im Kopf des Datenträgerinhalts verwendete Zeichencode, das Datum des letzten Schreibens oder Modifizierens des Datenträgerinhalts durch den Host, die Zeit des letzten Schreibens oder Modifizierens des Datenträgerinhalts durch den Host, das Datum des letzten Lesezugriffs auf den Datenträgerinhalt durch den Host, die Zeit des letzten Lesezugriffs auf den Datenträgerinhalt durch den Host, das Datum der Übertragung des Datenträgerinhalts des Plattencaches zur Diskette und die Zeit der Übertragung des Datenträgerinhalts des Plattencaches zur Diskette.

9. Verfahren zur Sicherung von Computerdaten nach einem der vorstehenden Ansprüche, **dadurch gekennzeichnet, dass** die Daten, wie sie bei der Wiederherstellung der Daten auf dem Clientcomputer vom Permanentspeicher auf den Pufferspeicher übertragen werden, die Grundinformationen nicht enthalten.

10. Einrichtung zum Ausführen eines Verfahrens zur Sicherung von Daten, bei dem die zu sichernden Daten von einem Clientcomputer zu einem Pufferspeicher übertragen werden, der aus einer Festplatte eines Sicherungsservers besteht, und anschließend die Daten vom genannten Pufferspeicher an den Permanentspeicher übertragen werden und in diesem Permanentspeicher, nach der Übertragung von Datenträgerinhalten vom Pufferspeicher zum Permanentspeicher, eine Sequenz einzigartiger Grundinformationen, die für jeden der genannten Datenträgerinhalte spezifisch ist, registriert wird, mit einem Sicherungsserver zum Steuern eines Pufferspeichers, der mit Datenträgerinhalten vorbestimmter Größe organisiert ist, und mit einer Lese-Schreib-Einrichtung an Permanentspeichern, wobei der Server über eine Kommunikationsschnittstelle zu mindestens einem Clientcomputer für Datenaustauschvorgänge und eine Datenbank zum Registrieren von Grundinformationen verfügt, **dadurch gekennzeichnet, dass** der Server außerdem über Maßnahmen verfügt, um den in den Datenträgerinhalten des Pufferspeichers zwischengespeicherten Daten Grundinformationen zuzuordnen, von denen sich jede auf einen der Datenträgerinhalte vorbestimmter Größe bezieht, die den genannten Pufferspeicher aufbauen, und um die Grundinformationen bei der Übertragung der Daten von den Permanentspeichern zum Pufferspeicher zu unterdrücken.

## Claims

1. Method for backing up computer data which consist in transferring the data to be backed up from a client computer to a buffer memory formed by the hard disk of a back up server, and then transferring the data from said buffer memory onto a permanent medium, **characterised in that** the buffer memory is organised into a plurality of volumes with predetermined sizes, and **in that** said method comprises a step for recording a unique sequence of basic data specific to each of said volumes, on said permanent medium after the data has been transferred from the buffer memory onto the permanent medium, and comprises a step of creating a database in which items of basic data are recorded, each relating to one of the volumes of predetermined size forming said buffer memory.

2. Method for backing up computer data according to claim 1, **characterised in that** the permanent medium is a magnetic cartridge and **in that** the basic data include the logical address on the volume start cartridge and the logical address on the volume end cartridge.

3. Method for backing up computer data according to claim 1 or 2, **characterised in that** the basic data include the approximate size of the volume.

4. Method for backing up computer data according to any one of the previous claims, **characterised in that** the basic data include the number of the reader used to transfer the volume from the disc cache to the cartridge and the number of the disc on which the volume is located at the time it is transferred to the cartridge.

5. Method for backing up computer data according to any one of the previous claims, **characterised in that** the basic data include the number of the disc partition in which the volume is located before it is transferred to the cartridge.

6. Method for backing up computer data according to any one of the previous claims, **characterised in that** the basic data include the processor number used to transfer the volume of the disc cache to the cartridge.

7. Method for backing up computer data according to any one of the previous claims, **characterised in that** the basic data include the bar code of the cartridge containing the volume and/or the name of the cartridge.

8. Method for backing up computer data according to any one of the previous claims, **characterised in that** the basic data include the hexadecimal code indicating the cartridge type, the total size of data stored on the cartridge, the maximum capacity of the cartridge, the state of the cartridge load counter, the hexadecimal code indicating the state of the volume, the number of the host machine in the configuration to which the volume belongs, the character code used in the volume header, the date of the most recent write or modification of the volume made by the host machine, the time of the most recent write or modification of the volume made by the host machine, the date of the most recent read access of the volume by the host machine, the time of the most recent read access of the volume by the host machine, the date on which the volume in the disc cache was transferred to the cartridge, and the time at which the volume in the disc cache was transferred to the cartridge.

9. Method for backing up computer data according to any one of the previous claims, **characterised in that** the data transferred from the permanent medium to the buffer memory when data are restored to the client computer do not include the basic data.

10. Equipment for carrying out a method for backing up data which consists in transferring the data to be backed up from a client computer to a buffer memory formed by the hard disc of a back-up server, and then transferring the data from said buffer memory onto a permanent medium, and recording a unique sequence of basic data specific to each of said volumes, on said permanent medium, after the volumes have been transferred from the buffer memory to the permanent medium, said equipment comprising a back-up server controlling a buffer memory organised into volumes of a predetermined sizes, and a station for reading/writing on permanent media, the server comprising an interface for communication with at least one client computer for data exchanges, and a database for recording basic data, the equipment being **characterised in that** the server also comprises means for associating the basic data with data recorded temporarily in the volumes of the buffer memory, the items of basic data each relating to one of the volumes of predetermined size forming said buffer memory, and for deleting the basic data when the data are transferred from the permanent media to the buffer memory.
